# EUROPEAN PATENT SPECIFICATION

(11) **EP 3 846 025 B1**
(45) Date of publication and mention of the grant of the patent: **04.09.2024**
(21) Application number: 19856824.8
(22) Date of filing: 19.07.2019
(51) Int. Cl.: G06F 3/0485, G06F 3/04883, G06F 9/451, G06F 3/0346, G06F 3/0481, G06F 3/04845, G06F 3/16, G06F 1/16, G06F 3/01

(54) **WINDOW SWITCHING METHOD AND APPARATUS, AND TERMINAL AND COMPUTER-READABLE STORAGE MEDIUM**
FENSTERWECHSELVERFAHREN UND -VORRICHTUNG SOWIE ENDGERÄT UND COMPUTERLESBARES SPEICHERMEDIUM
PROCÉDÉ ET APPAREIL DE CHANGEMENT DE FENÊTRE, ET TERMINAL ET SUPPORT D'INFORMATIONS LISIBLE PAR ORDINATEUR

(30) Priority: 05.09.2018 CN 201811036173
(43) Date of publication of application: 07.07.2021
(73) Proprietor: GUANGDONG OPPO MOBILE TELECOMMUNICATIONS CORP., LTD., Dongguan Guangdong 523860 (CN)
(72) Inventor: LI, Tongxi, Dongguan, Guangdong 523860 (CN); FU, Liangjing, Dongguan, Guangdong 523860 (CN); LIN, Zhiyong, Dongguan, Guangdong 523860 (CN); JING, Lei, Dongguan, Guangdong 523860 (CN)
(74) Representative: Manitz Finsterwald Patent- und Rechtsanwaltspartnerschaft mbB
(86) International application number: PCT/CN2019/096784
(87) International publication number: WO 2020/048246

(56) References cited:
- WO-A1-2015/049420
- CN-A- 104 461 242
- CN-A- 105 320 502
- CN-A- 106 547 417
- CN-A- 106 933 450
- CN-A- 107 273 111
- CN-A- 108 415 753
- CN-A- 109 271 223
- US-A1- 2016 085 438
- BRADEN FARMER: "Android Nougat's Freeform Window Mode: What It Is and How Developers Can Utilize It", 9 January 2017 (2017-01-09), XP055844224, Retrieved from the Internet <URL:https://www.xda-developers.com/android-nougats-freeform-window-mode-what-it-is-and-how-developers-can-utilize-it/> [retrieved on 20210923]
- GOOGLE: "Multi-Window Support - Android Developers", 19 May 2018 (2018-05-19), XP055659703, Retrieved from the Internet <URL:https://web.archive.org/web/20180519111727/https://developer.android.com/guide/topics/ui/multi-window> [retrieved on 20200120]

## Description

### TECHNICAL FIELD

The present disclosure relates to the field of user interaction technologies, and in particular to a window switching method, a terminal, and a non-transitory computer-readable storage medium.

### BACKGROUND

In the previous Android system, the display interface of all applications was displayed in full screen. If a transparency effect is not configured, only the display interface of one application is visible at a time. However, starting from Android 7.0-version, a multi-window function is supported. Users can open and watch the display interface of multiple applications at the same time, which greatly improves the operation efficiency of users.

A multi-finger touchpad gesture is provided in US patent No. US2016/0085438A1.

A brief introduction of Freeform window mode is given in Braden Farmer: "Android Nougat's Freeform Window Mode: What It Is and How Developers Can Utilize It", 9 January 2017 (2017-01-09, Retrieved from the Internet:URL:https://www.xda-developers.com/android-nougats-freeform-window-mode-what-it-is-and-how-developers-can-utilize-it/ [retrieved on 2021-09-23].

A brief introduction of multi-window support is given in Google: "Multi-Window Support- Android Developers", 19 May 2018 (2018-05-19), Retrieved from the Internet:URL:https://web.archive.org/ web/20180519111727/https://developer.android.com/guide/topics/ui/multi-window [retrieved on 2020-01-20].

A user interface display method, apparatus, and a terminal are provided in CN patent No. CN 108415753A.

A multi-window interface implementation method based on Android OS is provided in CN patent No. CN 104461242A.

A method and apparatus for displaying background task messages are provided in CN patent No. CN 106547417A.

### SUMMARY OF THE DISCLOSURE

The present disclosure provides a window switching method, a terminal, and a non-transitory computer-readable storage medium as set out in the appended set of claims.

### BRIEF DESCRIPTION OF THE DRAWINGS

To further illustrate technical solutions of embodiments of the present disclosure, drawings needed for description of the embodiments will be briefly introduced. Obviously, the following drawings are only some embodiments of the present disclosure. To any one of skill in the art, other drawings may be obtained without any creative work based on the following drawings.
FIG. 1 is a flow chart of a window switching method according to a first embodiment of the present disclosure.
FIG. 2 is a schematic view of an interface display for displaying a social application in a manner of a free window Freeform according to an embodiment of the present disclosure.
FIG. 3 is a flow chart of a window switching method according to a second embodiment of the present disclosure.
FIG. 4 is a schematic view of an interface display in which a free window Freeform is dragged to a central area of a terminal display interface according to an embodiment of the present disclosure.
FIG. 5 is a schematic view of an interface display in which a window switching selection interface is loaded on a free window Freeform according to an embodiment of the present disclosure.
FIG. 6 is a flow chart of switching a free window Freeform into a full-screen display window according to a second embodiment of the present disclosure.
FIG. 7 is a schematic view of an interface display according to an embodiment of the present disclosure, in which a free window Freeform corresponding to a social application is switched to a full-screen display window and a game application displayed in a full screen of a terminal is displayed in a manner of a free window Freeform.
FIG. 8 is a structural schematic view of an apparatus for switching windows according to an embodiment of the present disclosure.
FIG. 9 is a structural schematic view of a terminal according to an embodiment of the present disclosure.

### DETAILED DESCRIPTION

To make any one of skill in the art to understand the technical solutions of the present disclosure, the technical solutions provided by the present disclosure will be described in details by referring to the drawings and the embodiments. It should be understood that the specific embodiments described herein are only to explain the present disclosure, and are not used to limit the present disclosure. Terms of "first", "second", and the like in the description of the present disclosure are to distinguish different objects and cannot be understood to indicate or imply relative importance.

Furthermore, the terms of "including", "having" and any variations thereof indicate the presence of described features, integers, steps, operations, elements and/or components, but do not exclude presence or addition of one or more other features, integers, steps, operations, elements, components, and/or their combination.

It should also be understood that the terminology used in the description of the present disclosure is for the purpose of describing particular embodiments only and is not intended to limit the present disclosure. As in this specification and the claims, singular forms such as "a", "an" and "the" are intended to include the plural forms unless the context clearly indicates otherwise.

It should be further understood that the term "and/or" in the specification and the claims of the present disclosure refers to any combination of one or more of the items listed in association and all possible combinations, and includes these combinations.

As in this specification and the claims, the term "if" can be construed as "when" or "once" or "in response to a determination" or "in response to a detection" depending on the context. Similarly, the phrase "if determined" or "if [the described condition or event] is detected" can be interpreted, depending on the context, to mean "once determined" or "in response to the determination" or "once [the described condition or event] is detected" or "in response to [the described condition or event] being detected".

In the previous Android system, the display interface of all applications was displayed in full screen. If a transparency effect is not configured, only the display interface of one application is visible at a time. However, starting from Android 7.0-version, a multi-window function is supported. Users can open and watch the display interface of multiple applications at the same time, which greatly improves the operation efficiency of users.

However, when a terminal opens a display interface of multiple applications at the same time and implements operations on multiple applications through a multi-window manner, the terminal usually displays in a fixed-size window, which has the disadvantage of poor window display flexibility.

The embodiments of the present disclosure provide a window switching method, apparatus, terminal and computer-readable storage medium, which may solve the technical problem of poor window display flexibility when the terminal opens the display interfaces of multiple applications at the same time and implements the operations on multiple applications. In order to explain the above-mentioned technical solution of the present disclosure, specific embodiments are provided for description below.

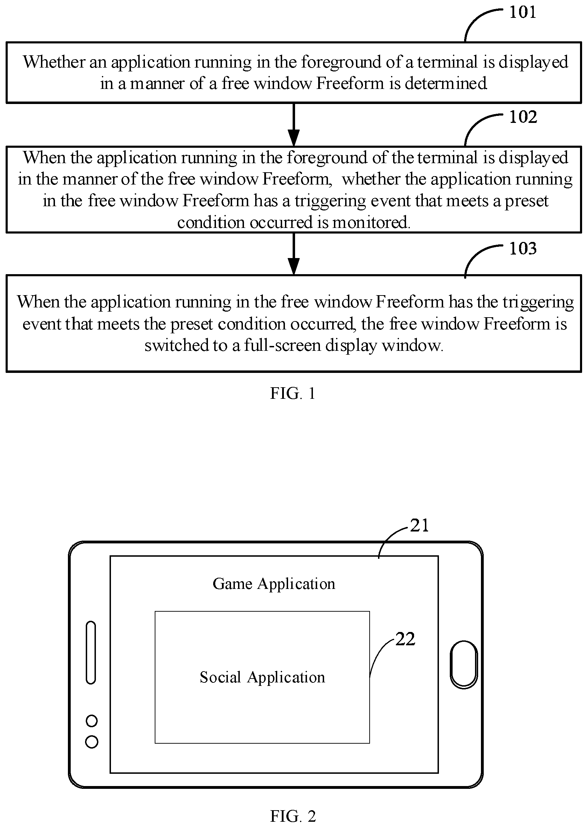

As shown in FIG. 1, FIG. 1 is a flow chart of a window switching method according to a first embodiment of the present disclosure. The method is applied to a terminal and can be executed by a free window Freeform switching device configured on the terminal, which is applicable to a case where a window display is required to improve flexibility. The method includes operations at blocks 101-103.

At block 101: Whether an application running in the foreground of a terminal is displayed in a manner of a free window Freeform is determined.

The terminal may include a mobile terminal such as a smart phone, a tablet computer, or a learning machine. The operating system of the terminal may be such as an Android system, a Google system, or an IOS system. The terminal may be installed with applications such as a browser, a social application, an e-book reading application, a video player, an audio player, a game application, a payment application, and the like.

In the embodiment of the present disclosure, the free window Freeform is a type of multiple windows, and may be called a free window manner, an active window, and a free window, similar to a floating window. But in fact, the free window Freeform is a real active window, including features of a complete activity window, such as a complete Activity, Window, Focus, Input, etc.

The free window Freeform is usually displayed above the display interface of another application, which is a true multi-window. In the Android system, the Freeform window and floating window are in different memory stacks of the Activity Manager management service, and implement display and scheduling functions through different stacks.

Specifically, the terminal can open the free window Freeform in two ways, one is defined by System Feature, and the other is started by adding a switch through Setting.

For example, in the Android system, when the free window Freeform is opened through the System Feature definition, a Feature configuration file, frameworks/native/data/etc/android.software.freeform_window_management.xml, defined in an Android open source project (AOSP) may be first viewed. The file shall be pushed to a directory of the mobile phone: system/etc/permissions/. When the terminal is turned on, Android Package Manager Service (PMS) will read an Extensible Markup Language (XML) configuration in the directory to enable the freeform feature, such that the application may be displayed in the manner of the free window Freeform.

Generally, the terminal has a unique freeform stack defined in advance. Each Activity created by all applications supporting the free window Freeform may be launched in a specific Freeform stack. Each Activity in the Android system is located in a Task. A task may contain multiple Activities. There may be multiple instances of a same activity. In Android Manifest.xml, the instances of Activity in Task may be controlled through android: launch Mode.

In addition, when the Activity is started to run, the instances of started Activity in Task may be controlled through setFlag. The significance of Task management also lies in a recent task list and Back stack. When multi-tasking is called up through a multi-tasking key (such as a long press on the Home key, an arranged multi-tasking key), it is actually that a recently launched task list is obtained from Activity Manager Service. The Back stack manages the logic about which Activity should jump to when the Back button is clicked on the Activity.

When the application supports to display in the manner of the free window Freeform, and a user opens the application in the free window Freeform manner, the terminal may move the Task to the Freeform stack via an application interface provided by an Activity Manager Service (AMS) to support the task to move between different stacks, such that the application displays in the manner of the free window Freeform.

Therefore, the determining whether the application running in the foreground of the terminal is displayed in the manner of the free window Freeform may include: detecting whether the Activity of the application running in the foreground of the terminal is located in a Freeform stack predefined by the terminal. When the Activity is located in the Freeform stack, the application running in the foreground of the terminal is determined to be displayed in the manner of the free window Freeform.

In some embodiments, the determining whether the application running in the foreground of the terminal is displayed in the manner of the free window Freeform may further include: obtaining a screenshot of the current display interface of the terminal, identifying the screenshot, and determining whether the display interface of the application running in the foreground of the terminal is included in the screenshot of the current display interface of the terminal, based on the identification result of the screenshot. When the display interface of the application running in the foreground of the terminal is included, the application running in the foreground of the terminal is determined to be displayed in the manner of the free window Freeform.

For example, as shown in FIG. 2, the current full-screen display interface of the terminal is the display interface 21 of a game application. The display interface 22 of a social application is displayed above the display interface 21 of the game application. The social application is determined to be an application displayed in the manner of the free window Freeform. The game application determined to be not an application displayed in the manner of the free window Freeform.

At block 102: When the application running in the foreground of the terminal is displayed in the manner of the free window Freeform, whether the application running in the free window Freeform has a triggering event that meets a preset condition occurred is monitored.

In the embodiment of the present disclosure, the trigger event that meets the preset condition refers to a trigger event that meets a requirement of switching the free window Freeform into a full-screen display window.

In the embodiment of the present disclosure, the application running in the foreground of the terminal being displayed in the manner of the free window Freeform is a prerequisite for triggering the monitoring whether the triggering event that meets the preset condition occurs in the application running in the manner of the free window Freeform.

In some embodiments, when the application running in the foreground of the terminal is not displayed in the manner of the free window Freeform, the monitoring whether the application running in the free window Freeform has a triggering event that meets a preset condition occurred is not performed, and the determining whether the application running in the foreground of the terminal is displayed in the manner of the free window Freeform proceeds to performed, or the operation of the free window Freeform switching apparatus is ended.

At block 103: When the application running in the free window Freeform has the triggering event that meets the preset condition occurred, the free window Freeform is switched to a full-screen display window.

In the embodiment of the present disclosure, the switching the free window Freeform to a full-screen display window may include: changing an application display mode from the manner of the free window Freeform to an ordinary full-screen display mode. Alternatively, the manner of the free window Freeform may be retained, and the size of the free window Freeform is adjusted to the size of the full-screen display window in the ordinary full-screen display mode.

The ordinary full-screen display mode means that the window displayed in the full-screen mode is not a free window Freeform, but a full-screen display window in the current conventional full-screen display mode.

In the embodiment of the present disclosure, after the determining whether the application running in the foreground of the terminal is displayed in the manner of the free window Freeform, whether the application running in the free window Freeform has a triggering event that meets a preset condition occurred is monitored. When the application running in the free window Freeform has the triggering event that meets the preset condition occurred, the free window Freeform is timely switched to a full-screen display window. In this way, the free window Freeform is automatically switched to a full-screen display, which meets the switching needs of users for window display size, and improves the flexibility of free window Freeform display.

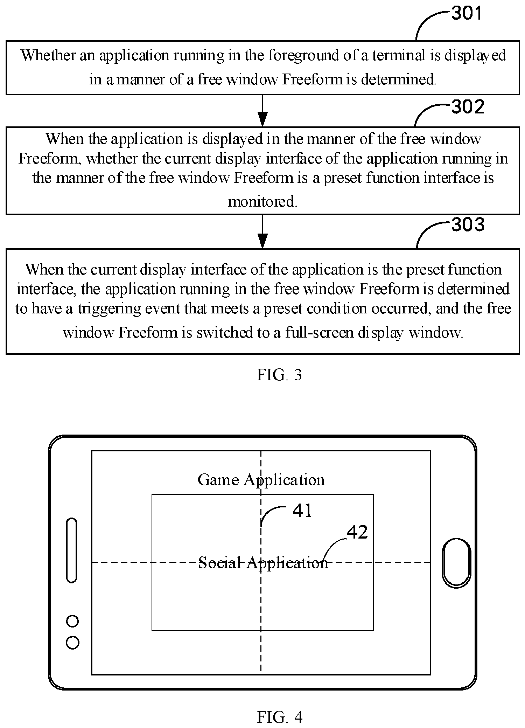

In some embodiments, as shown in FIG. 3, the method specifically includes operations 301 to 303.

At block 301: Whether an application running in the foreground of a terminal is displayed in a manner of a free window Freeform is determined.

At block 302: When the application is displayed in the manner of the free window Freeform, whether the current display interface of the application running in the manner of the free window Freeform is a preset function interface is monitored.

At block 303: When the current display interface of the application is the preset function interface, the application running in the free window Freeform is determined to have a triggering event that meets a preset condition occurred, and the free window Freeform is switched to a full-screen display window.

The preset function interface refers to a function interface preset and selected according to a configuration from users and corresponding to the application, or a function interface set at the factory and corresponding to the application. For example, when the application is a social application, the preset function interface may be an interface of Moments; when the application is a social application or a payment application, the preset function interface may be a "grab-redpackage" interface.

In the embodiment of the present disclosure, whether the current display interface of the application running in the manner of the free window Freeform is the preset function interface is monitored. When the current display interface of the application is the preset function interface, the application running in the free window Freeform is determined to have a triggering event that meets a preset condition occurred, and the free window Freeform is switched to a full-screen display window. In this way, the free window Freeform is automatically switched to a full-screen display when the display interface is the preset function interface, which meets the switching needs of users for window display size, and improves the flexibility of free window Freeform display.

In some embodiments, when the current display interface of the application in the free window Freeform is changed from the preset function interface to a non-preset function interface, the display size of the application running in the full-screen display window is restored to the free window Freeform so that users can switch back and forth between free window Freeform and full screen display.

In some embodiments, the monitoring whether the application running in the free window Freeform has a triggering event that meets a preset condition occurred includes: monitoring whether a preset operation instruction for the free window Freeform is received. When the preset operation instruction for the free window Freeform is received, the triggering event that meets the preset condition is determined to occur in the application running in the manner of the free window Freeform.

That is, when the preset operation instruction that users actively enlarge the free window Freeform to a full-screen display window is received, the triggering event that meets the preset condition is determined to occur in the application running in the manner of the free window Freeform.

In some embodiments, the monitoring whether the preset operation instruction for the free window Freeform is received includes: monitoring whether the preset operation instruction for dragging the free window Freeform to a preset position is received.

Specifically, in the process of the monitoring whether the preset operation instruction for dragging the free window Freeform to the preset position is received, prompt information may be output when a drag operation of dragging the free window Freeform to the preset position is monitored, and whether the drag operation ends when the free window Freeform remains at the preset position is monitored. When the drag operation ends, the preset operation instruction for dragging the free window Freeform to the preset position is determined to be received.

The prompt information may include prompt information output in a manner of displaying a dotted line or displaying a dotted frame.

For example, as shown in FIG. 4, when a user is detected to drag the free window Freeform to a center area of the terminal display interface, a dotted line 41 and a dotted line 42 are displayed, prompting that the current position of the free window Freeform is the center area of the terminal display interface. When it is detected that the free window Freeform remains in the center area and the drag operation ends, the triggering event that meets the preset condition is determined to occur in the application running in the manner of the free window Freeform, and the free window Freeform is switched to a full-screen display window. In this way, the free window Freeform may be automatically switched to a full-screen display, which meets the switching needs of users for window display size, and improves the flexibility of free window Freeform display.

It should be noted that in addition to the center area of the terminal display interface, the preset position may also be a user-defined position, such as the upper left corner of the terminal display interface, the upper right corner of the terminal display interface, the lower left corner of the terminal display interface, or the lower right corner of the terminal display interface, or any other position of the terminal display interface. When the user drags the free window Freeform to the preset position, the user is promoted that the current position of the free window Freeform has reached the preset position, by displaying a dotted line or a dotted frame. In this way, the user may determine whether the preset operation instruction is required to be triggered. When it is determined that the preset operation instruction is required to be triggered, the user may keep the free window Freeform at the preset position and end the drag operation such that the terminal switches the free window Freeform into a full-screen display window.

In some embodiments, the monitoring whether the application running in the free window Freeform has a triggering event that meets a preset condition occurred further includes: monitoring whether the preset operation instruction triggered by rotating the terminal by a preset angle is received.

The preset angle may be a rotation angle defined based on a configuration of a user or a rotation angle set at the factory. For example, the preset angle may be 60 ° to 180 °. When the terminal detects that the terminal is rotated by 60 ° to 180 °, the triggering event that meets the preset condition is determined to occur in the application running in the manner of the free window Freeform, and the free window Freeform is switched to a full-screen display window.

In some embodiments, the monitoring whether the application running in the free window Freeform has a triggering event that meets a preset condition occurred further includes: monitoring whether the preset operation instruction triggered by a voice form is received.

For example, the operation instruction triggered by the voice form may be a voice signal corresponding to "full-screen displaying the free window". When the terminal receives the voice signal, the terminal switches the free window Freeform to a full-screen display window.

In some embodiments, the monitoring whether the application running in the free window Freeform has a triggering event that meets a preset condition occurred further includes: monitoring whether the preset operation instruction triggered by a touch gesture in the display area of the free window Freeform is received.

For example, the operation instruction triggered by the touch gesture in the display area of the free window Freeform may be an operation instruction triggered by a click operation in the display area of the free window Freeform, or by a multi-point sliding outward in the display area of the free window Freeform.

In some embodiments, when the trigger event that meets the preset condition occurs in the application running in the manner of the free window Freeform, the switching the free window Freeform to a full-screen display window includes: when the trigger event that meets the preset condition occurs in the application running in the manner of the free window Freeform, popping up a floating window loaded with a window switching selection interface; and switching the free window Freeform to a full-screen display window based on a received full-screen display instruction triggered at the window switching selection interface.

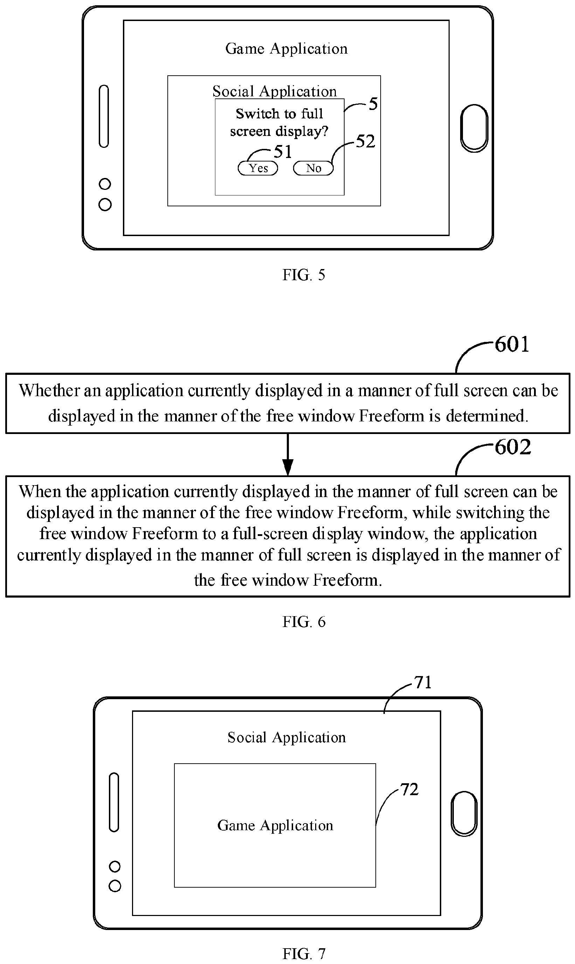

For example, as shown in FIG. 5, when the terminal detects that the triggering event that meets the preset condition occurs in the application running in the manner of the free window Freeform, a floating window loaded with a window switching selection interface 5 pops up, prompting the user to confirm whether the free window Freeform needs to be switched to a full-screen display window. When the full-screen display instruction triggered by the user clicking a confirmation control 51 in the window switching selection interface 5 is received, the free window Freeform is switched to the full-screen display window. When a cancel switch instruction triggered by the user clicking a cancel control 52 in the window switching selection interface 5 is received, the display size of the free window Freeform is kept, and the free window Freeform is not switched to the full-screen display window. In this way, the free window Freeform may not be mistakenly switched to a full-screen display window.

Further, in some embodiments, as shown in FIG. 6, the switching the free window Freeform to a full-screen display window includes operations 601 and 602.

At block 601: Whether an application currently displayed in a manner of full screen can be displayed in the manner of the free window Freeform is determined.

At block 602: When the application currently displayed in the manner of full screen can be displayed in the manner of the free window Freeform, while switching the free window Freeform to a full-screen display window, the application currently displayed in the manner of full screen is displayed in the manner of the free window Freeform.

In the embodiment of the present disclosure, whether the application can be displayed in the manner of the free window Freeform is preset. For example, after a software manufacturer develops an application or upgrades an application to make it applicable to display in the manner of the free window Freeform, it means that the application can be performed in the manner of the free window Freeform.

For example, video playback applications, social applications, and game applications are applications that can be displayed in the manner of the free window Freeform. As shown in FIG. 2, the current full-screen interface of the terminal is the display interface 21 of a game application. The application displayed in the manner of the free window Freeform is a social application. The game application is an application that supports to display in the manner of the free window Freeform.

When the free window Freeform corresponding to the social application is switched to a full-screen display window, it can be determined that the current full-screen displaying application (the game application) can be displayed in the manner of the free window Freeform. As shown in FIG. 7, while the free window Freeform corresponding to the social application is switched to the full-screen display window 71, the game application currently displayed in full screen on the terminal may be displayed in the free window Freeform 72.

In the embodiment, when the free window Freeform is switched to a full-screen display window, whether the application currently displayed in a manner of full screen can be displayed in the manner of the free window Freeform is determined. When the application currently displayed in the manner of full screen can be displayed in the manner of the free window Freeform, while switching the free window Freeform to a full-screen display window, the application currently displayed in the manner of full screen is displayed in the manner of the free window Freeform. In this way, while switching the free window Freeform to a full-screen display window, it may be ensured that the application displayed in full screen under the free window Freeform can also be displayed, realizing the interchange of window display manners.

In some embodiments, after the free window Freeform is switched to a full-screen display window, the method further includes: receiving a window switching instruction triggered on the full-screen display window, and restoring the full-screen display window to the free window Freeform based on the window switching instruction.

That is, after the free window Freeform is switched to a full-screen display window, the full-screen display window can also be restored to the free window Freeform based on the received window switching instruction, such that the user can switch back and forth between the free window Freeform and the full-screen display window, which meets the switching needs of users for window display size, and improves the flexibility of free window Freeform display.

The window switching instruction may also be triggered by a window switching instruction triggered by rotating the terminal by a specific angle, a window switching instruction triggered by a voice form, by a touch gesture, or a window switching control in the full-screen display window.

It should be noted that the triggering methods of the related instructions described above can be mutually common, as long as the logic of the triggering is correct. That is, in a same scenario, a triggering operation corresponds to a correct response.

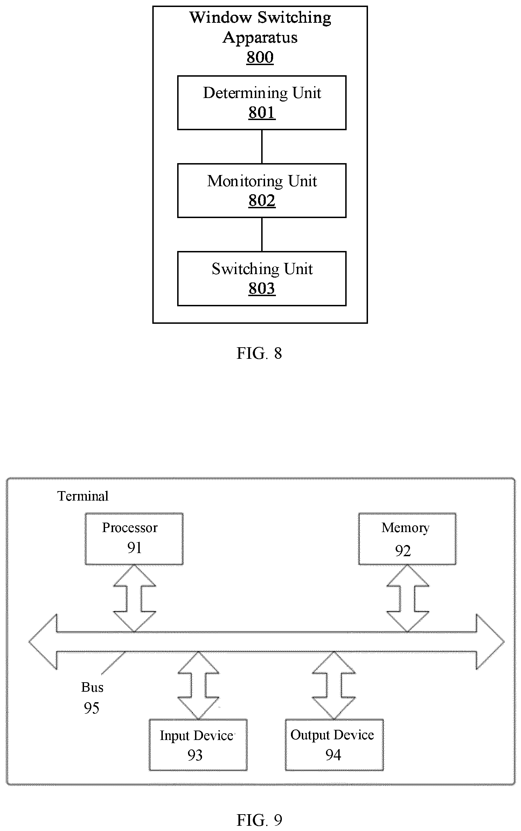

FIG. 8 is a structural schematic view of an apparatus 800 for switching windows according to an embodiment of the present disclosure, including a determining unit 801, a monitoring unit 802, and a switching unit 803.

The determining unit 801 is configured to determine whether an application running in the foreground of a terminal is displayed in a manner of a free window Freeform.

The monitoring unit 802 is configured to monitor whether the application running in the free window Freeform has a triggering event that meets a preset condition occurred, when the application running in the foreground of the terminal is displayed in the manner of the free window Freeform.

The switching unit 803 is configured to switch the free window Freeform to a full-screen display window, when the application running in the free window Freeform has the triggering event that meets the preset condition occurred.

In some embodiments, the monitoring unit 802 is specifically configured to monitor whether the current display interface of the application running in the manner of the free window Freeform is a preset function interface. When the current display interface of the application is the preset function interface, the triggering event that meets the preset condition is determined to occur in the application running in the manner of the free window Freeform.

In some embodiments, the monitoring unit 802 is specifically configured to monitor whether a preset operation instruction for the free window Freeform is received. When the preset operation instruction for the free window Freeform is received, the triggering event that meets the preset condition is determined to occur in the application running in the manner of the free window Freeform.

In some embodiments, the monitoring unit 802 is further specifically configured to monitor whether the preset operation instruction for dragging the free window Freeform to a preset position is received; and/or monitor whether the preset operation instruction triggered by rotating the terminal by a preset angle is received; and/or monitor whether the preset operation instruction triggered by a voice form is received; and/or monitor whether the preset operation instruction triggered by a touch gesture in the display area of the free window Freeform is received.

In some embodiments, the monitoring unit 802 is further specifically configured to output prompt information when a drag operation of dragging the free window Freeform to the preset position is monitored, and monitor whether the drag operation ends when the free window Freeform remains at the preset position. When the drag operation ends, the preset operation instruction for dragging the free window Freeform to the preset position is determined to be received. The prompt information may include prompt information output in a manner of displaying a dotted line or displaying a dotted frame.

In some embodiments, the switching unit 803 is further specifically configured to pop up a floating window loaded with a window switching selection interface when the trigger event that meets the preset condition occurs in the application running in the manner of the free window Freeform; and switch the free window Freeform to a full-screen display window based on a received full-screen display instruction triggered at the window switching selection interface.

In some embodiments, the switching unit 803 is further specifically configured to determine whether the application currently displayed in a manner of full screen can be displayed in the manner of the free window Freeform. When the application currently displayed in the manner of full screen can be displayed in the manner of the free window Freeform, while switching the free window Freeform to a full-screen display window, the application currently displayed in the manner of full screen is displayed in the manner of the free window Freeform.

In some embodiments, the switching unit 803 is further specifically configured to change an application display mode from the manner of the free window Freeform to an ordinary full-screen display mode; or, retain the manner of the free window Freeform, and adjust the size of the free window Freeform to the size of the full-screen display window in the ordinary full-screen display mode.

In some embodiments, the switching device may further include a restoration unit configured to receive a window switching instruction triggered on the full-screen display window after switching the free window Freeform to a full-screen display window, and restore the full-screen display window to the free window Freeform based on the window switching instruction.

In some embodiments, the determining unit 801 is further specifically configured to detect whether the Activity of the application running in the foreground of the terminal is located in a Freeform stack predefined by the terminal. When the Activity is located in the Freeform stack, the application running in the foreground of the terminal is determined to be displayed in the manner of the free window Freeform.

In some embodiments, the above-mentioned determination unit 801 is further specifically configured to obtain a screenshot of the current display interface of the terminal, identify the screenshot, and determine whether the display interface of the application running in the foreground of the terminal is included in the screenshot of the current display interface of the terminal based on the identification result of the screenshot. When the display interface of the application running in the foreground of the terminal is included, the application running in the foreground of the terminal is determined to be displayed in the manner of the free window Freeform.

It should be noted that, for convenience and brevity of the description, reference for the specific working process of the window switching device 800 may be made to the corresponding process of the method described in FIG. 1 to FIG. 7, and details are not described herein again.

As shown in FIG. 9, the present disclosure provides a terminal for implementing the foregoing window switching method. The terminal may be a terminal such as a smart phone, a tablet computer, or a learning machine, and includes: one or more input devices 93 (only one is shown in FIG. 9) and one or more output devices 94 (only one is shown in FIG. 9). A processor 91, a memory 92, the input device 93, and the output device 94 are connected through a bus 95.

It should be understood that, in the embodiment of the present disclosure, the processor 91 may be a central processing unit (CPU), and the processor may also be another general-purpose processor or a digital signal processor (DSP), an application specific integrated circuit (ASIC), a field-programmable gate array (FPGA) or other programmable logic devices, discrete gate or transistor logic devices, discrete hardware components, etc. The general-purpose processor may be a microprocessor or the processor may be any conventional processor or the like.

The input device 93 may include a virtual keyboard, a touch pad, a fingerprint sensor (for collecting fingerprint information and orientation information of a user), a microphone, and the like. The output device 94 may include a display, a speaker, and the like.

The memory 92 may include a read-only memory and a random access memory, and provide instructions and data to the processor 91. A part or all of the memory 92 may further include a non-volatile random access memory. For example, the memory 92 may also store information of a device type.

The memory 92 stores a computer program, and the computer program can run on the processor 91. For example, the computer program is a program of a window switching method. When the processor 91 executes the computer program, the operations in the embodiments of the window switching method are implemented, for example, operations 101 to 103 shown in FIG. 1. Alternatively, when the processor 91 executes the computer program, the functions of the modules/units in the foregoing device embodiments are implemented, for example, the functions of the units 801 to 803 shown in FIG. 8.

The computer program may be divided into one or more modules/units, and the one or more modules/units are stored in the memory 92 and executed by the processor 91 to complete the present disclosure. The one or more modules/units may be a series of computer program instruction segments capable of performing specific functions, and the instruction segments are used to describe an execution process of the computer program performing window switching on the terminal. For example, the above computer program can be divided into the determining unit, the monitoring unit, and the switching unit. The specific functions of each unit are as follows: The determining unit is configured to determine whether an application running in the foreground of a terminal is displayed in a manner of a free window Freeform. The monitoring unit is configured to monitor whether the application running in the free window Freeform has a triggering event that meets a preset condition occurred, when the application running in the foreground of the terminal is displayed in the manner of the free window Freeform. The switching unit is configured to switch the free window Freeform to a full-screen display window, when the triggering event that meets the preset condition occurs in the application running in the manner of the free window Freeform.

Those skilled in the art can clearly understand that, for the convenience and brevity of the description, only the above-mentioned division of functional units and modules is used as an example. In practical applications, the above functions can be allocated by different functional units or modules according to needs. That is, the internal structure of the above device is divided into different functional units or modules to complete all or part of the functions described above. Each functional unit and module in the embodiments may be integrated into one processing unit, or each unit may exist separately physically, or two or more units may be integrated into one unit. The integrated unit may be implemented in the form hardware, or in the form of software functional units. In addition, the specific names of the functional units and modules are only for the convenience of distinguishing from each other, and are not used to limit the protection scope of the present disclosure. For specific working processes of the units and modules in the foregoing system, reference may be made to corresponding processes in the foregoing method embodiments, and details are not described herein again.

In the above embodiments, the description of each embodiment has its own emphasis. For a part that is not detailed or recorded in an embodiment, reference may be made to related descriptions of other embodiments.

Those skilled in the art may realize that the units and algorithm operations of each example described in connection with the embodiments disclosed herein can be implemented by electronic hardware, or a combination of computer software and electronic hardware. Whether these functions are performed by hardware or software depends on the specific application and design constraints of the technical solution. Those skilled in the art can use different methods to implement the described functions for each specific application, but such implementation should not be considered to be beyond the scope of the present disclosure.

In the embodiments provided in the present disclosure, it should be understood that the disclosed devices/terminals and methods may be implemented in other ways. For example, the device/terminal embodiments described above are only schematic. For example, the division of the above modules or units is only a logical function division. In actual implementation, there may be another division manner, such as multiple units or components. It can be combined or integrated into another system, or some features can be ignored or not implemented. In addition, the displayed or discussed mutual coupling or direct coupling or communication connection may be indirect coupling or communication connection through some interfaces, devices or units, which may be electrical, mechanical or other forms.

The units described above as separate components may or may not be physically separated, and the components displayed as units may or may not be physical units, which may be located in one place, or may be distributed on multiple network units. Some or all of the units may be selected according to actual needs to achieve the objective of the solution of the embodiments.

In addition, each functional unit in each embodiment of the present disclosure may be integrated into one processing unit, or each of the units may exist separately physically, or two or more units may be integrated into one unit. The above integrated unit may be implemented in the form of hardware or in the form of software functional unit.

When the above integrated modules/units are implemented in the form of software functional units and sold or used as independent products, they can be stored in a computer-readable storage medium. Based on this understanding, the present disclosure implements all or part of the processes in the methods of the above embodiments, and can also be completed by a computer program instructing related hardware. The above computer program can be stored in a computer-readable storage medium. The computer program is executed by a processor to implement the operations of the foregoing method embodiments. The computer program includes computer program code, and the computer program code may be in a source code form, an object code form, an executable file, or some intermediate form. The computer-readable medium may include: any entity or device capable of carrying the computer program code, a recording medium, a U disk, a mobile hard disk, a magnetic disk, an optical disk, a computer memory, a read-only memory (ROM), a random access memory Random Access Memory (RAM), electric carrier signals, telecommunication signals, and software distribution media. It should be noted that the content contained in the above computer-readable medium can be appropriately increased or decreased according to the requirements of legislation and patent practice in jurisdictions. For example, in some jurisdictions, computer-readable media do not include electric carrier signals and telecommunication signals.

The above embodiments are only to describe the technical solution of the present disclosure, but are not limited thereto. Although the present disclosure has been described in detail with reference to the foregoing embodiments, those skilled in the art should understand that they can still modify the technical solutions recorded in the foregoing embodiments, or replace some of the technical features equivalently. These modifications or replacements do not deviate the essence of the corresponding technical solutions from the scope of the technical solutions of the embodiments of the present disclosure, and should be within the scope of the present disclosure.

## Claims

1. A window switching method, comprising:
determining (101, 301) whether an application running in a foreground of a terminal is displayed in a manner of a free window Freeform;
monitoring (102) whether the application running in the free window Freeform has a triggering event that meets a preset condition occurred, in response to the application being displayed in the manner of the free window Freeform; and
switching (103) the free window Freeform to a full-screen display window, in response to the application running in the free window Freeform having the triggering event that meets the preset condition occurred;
wherein the monitoring (102) whether the triggering event that meets the preset condition occurs in the application in response to the application being displayed in the manner of the free window Freeform comprises:
monitoring (302) whether a current display interface of the application running in the free window Freeform is a preset function interface; wherein the preset function interface indicates that the application is performing a preset function on the current display interface;
determining (303) the application running in the free window Freeform to have the triggering event that meets the preset condition occurred, in response to the current display interface of the application being the preset function interface; and
restoring the application running in the full-screen display window to the free window Freeform, in response to the current display interface of the application being changed from the preset function interface to a non-preset function interface; wherein the non-preset function interface indicates that the application is not performing the preset function on the current display interface.

2. The method according to claim 1, wherein the monitoring (102) whether the application running in the free window Freeform has the triggering event that meets the preset condition occurred in response to the application being displayed in the manner of the free window Freeform comprises:
monitoring whether receiving a preset operation instruction for the free window Freeform; and
determining the application running in the free window Freeform to have the triggering event that meets the preset condition occurred, in response to receiving the preset operation instruction for the free window Freeform.

3. The method according to claim 2, wherein the monitoring whether receiving a preset operation instruction for the free window Freeform comprises:
monitoring whether receiving a preset operation instruction for dragging the free window Freeform to a preset position; and/or,
monitoring whether receiving a preset operation instruction triggered by rotating the terminal with a preset angle; and/or,
monitoring whether receiving a preset operation instruction triggered by a voice form; and/or,
monitoring whether receiving a preset operation instruction triggered by a touch gesture in a display area of the free window Freeform.

4. The method according to claim 3, wherein the monitoring whether receiving the preset operation instruction for dragging the free window Freeform to the preset position comprises:
outputting prompt information in response to a dragging operation for dragging the free window Freeform to the preset position, and monitoring whether the dragging operation ends in response to the free window Freeform remaining at the preset position; and
determining the preset operation instruction for dragging the free window Freeform to the preset position has been received, in response to the dragging ending; wherein the prompt information comprises prompt information output in a manner of displaying a dotted line or displaying a dotted frame.

5. The method according to claim 1, wherein the switching (103) the free window Freeform to the full-screen display window in response to the application running in the free window Freeform having the triggering event that meets the preset condition occurred comprises:
popping up a floating window loaded with a window switching selection interface, in response to the application running in the free window Freeform having the triggering event that meets the preset condition occurred, and
switching the free window Freeform to the full-screen display window based on a full-screen display instruction triggered at the window switching selection interface.

6. The method according to claim 4, wherein before the switching (103) the free window Freeform to the full-screen display window, the method further comprises:
determining (601) whether an application currently displayed in a manner of full screen is capable of being displayed in the manner of the free window Freeform;
the switching (103) the free window Freeform to the full-screen display window comprises:
while switching the free window Freeform to the full-screen display window, switching (602) the application currently displayed in the manner of full screen to display in the manner of the free window Freeform in response to the application currently displayed in the manner of full screen being capable of being displayed in the manner of the free window Freeform.

7. The method according to claim 1, wherein the switching (103) the free window Freeform to the full-screen display window comprises:
changing an application display mode from the manner of the free window Freeform to a manner of full screen; or
retaining the manner of the free window Freeform, and adjusting the size of the free window Freeform to the size of a full-screen display window in the manner of full screen.

8. The method according to claim 7, wherein after the switching (103) the free window Freeform to the full-screen display window, the method further comprises:
receiving a window switching instruction triggered on the full-screen display window; and
restoring the full-screen display window to the free window Freeform based on the window switching instruction.

9. The method according to claim 1, wherein the determining (101, 301) whether the application running in the foreground of the terminal is displayed in the manner of the free window Freeform comprises:
detecting whether an Activity of the application running in the foreground of the terminal is located in a Freeform stack predefined by the terminal; and
determining the application running in the foreground of the terminal to be displayed in the manner of the free window Freeform in response to the Activity being located in the Freeform stack.

10. The method according to claim 1, wherein the determining (101,301) whether the application running in the foreground of the terminal is displayed in the manner of the free window Freeform comprises:
obtaining a screenshot of a display interface of the terminal, identifying the screenshot, and obtaining an identification result of the screenshot;
determining whether a display interface of the application running in the foreground of the terminal is included in the screenshot of the display interface of the terminal based on the identification result of the screenshot; and
determining the application running in the foreground of the terminal to be displayed in the manner of the free window Freeform in response to the display interface of the application running in the foreground of the terminal being included.

11. The method according to claim 1, further comprising:
performing the determining whether the application running in the foreground of the terminal is displayed in the manner of the free window Freeform proceeds to being
performed in response to the application running in the foreground of the terminal being not displayed in the manner of the free window Freeform; or
ending the window switching method in response to the application running in the foreground of the terminal being not displayed in the manner of the free window Freeform.

12. A terminal, comprising a memory (92), a processor (91) and a computer program stored in the memory (92) and executable by the processor (91), **characterized in that** the processor (91) executes the computer program to perform a window switching method according to any one of claims 1-11.

13. A non-transitory computer-readable storage medium, storing a computer program, **characterized in that** a processor executes the computer program to perform a window switching method according to any one of claims 1 to 11.

## Patentansprüche

1. Fensterumschaltverfahren, umfassend:
Bestimmen (101, 301), ob eine im Vordergrund eines Endgeräts ausgeführte Anwendung in einer Art eines freien Fensters Freeform angezeigt wird;
Überwachen (102), ob bei der im freien Fenster Freeform ausgeführten Anwendung ein auslösendes Ereignis aufgetreten ist, das eine voreingestellte Bedingung erfüllt, als Reaktion darauf, dass die Anwendung in der Art des freien Fensters Freeform angezeigt wird; und
Umschalten (103) des freien Fensters Freeform auf ein Vollbildanzeigefenster als Reaktion darauf, dass bei der Anwendung, die im freien Fenster Freeform ausgeführt wird, das auslösende Ereignis aufgetreten ist, das die voreingestellte Bedingung erfüllt;
wobei das Überwachen (102), ob das auslösende Ereignis, das die voreingestellte Bedingung erfüllt, in der Anwendung auftritt, als Reaktion darauf, dass die Anwendung in der Art des freien Fensters Freeform angezeigt wird, umfasst:
Überwachen (302), ob eine aktuelle Anzeigeschnittstelle der im freien Fenster Freeform ausgeführten Anwendung eine voreingestellte Funktionsschnittstelle ist; wobei die voreingestellte Funktionsschnittstelle angibt, dass die Anwendung eine voreingestellte Funktion auf der aktuellen Anzeigeschnittstelle ausführt;
Bestimmen (303), dass bei der im freien Fenster Freeform ausgeführten Anwendung das auslösende Ereignis, das die voreingestellte Bedingung erfüllt, aufgetreten ist, als Reaktion darauf, dass die aktuelle Anzeigeschnittstelle der Anwendung die voreingestellte Funktionsschnittstelle ist; und
Wiederherstellen der Anwendung, die im Vollbildanzeigefenster ausgeführt wird, in das freie Fenster Freeform als Reaktion darauf, dass die aktuelle Anzeigeschnittstelle der Anwendung von der voreingestellten Funktionsschnittstelle in eine nicht-voreingestellte Funktionsschnittstelle geändert wird;
wobei die nicht-voreingestellte Funktionsschnittstelle angibt, dass die Anwendung die voreingestellte Funktion auf der aktuellen Anzeigeschnittstelle nicht durchführt.

2. Verfahren nach Anspruch 1, wobei das Überwachen (102), ob bei der im freien Fenster Freeform ausgeführten Anwendung das auslösende Ereignis aufgetreten ist, das die voreingestellte Bedingung erfüllt, als Reaktion darauf, dass die Anwendung in der Art des freien Fensters Freeform angezeigt wird, umfasst:
Überwachen, ob eine voreingestellte Bedienungsanweisung für das freie Fenster Freeform empfangen wird; und
Bestimmen, ob bei der Anwendung, die im freien Fenster Freeform ausgeführt wird, das auslösende Ereignis, das die voreingestellte Bedingung erfüllt, aufgetreten ist, als Reaktion auf das Empfangen der voreingestellten Bedienungsanweisung für das freie Fenster Freeform.

3. Verfahren nach Anspruch 2, wobei das Überwachen, ob eine voreingestellte Bedienungsanweisung für das freie Fenster Freeform empfangen wird, umfasst:
Überwachen, ob eine voreingestellte Bedienungsanweisung zum Ziehen des freien Fensters Freeform an eine voreingestellte Position empfangen wird; und/oder,
Überwachen, ob das Empfangen einer voreingestellten Bedienungsanweisung durch Drehen des Endgeräts mit einem voreingestellten Winkel ausgelöst wird; und/oder,
Überwachen, ob eine durch ein Sprachsignal ausgelöste voreingestellte Bedienungsanweisung empfangen wird; und/oder,
Überwachen, ob das Empfangen einer voreingestellten Bedienungsanweisung durch eine Berührungsgeste in einem Anzeigebereich des freien Fensters Freeform ausgelöst wird.

4. Verfahren nach Anspruch 3, wobei das Überwachen, ob die voreingestellte Bedienungsanweisung zum Ziehen des freien Fensters Freeform in die voreingestellte Position empfangen wird, umfasst:
Ausgeben von Aufforderungsinformationen als Reaktion auf einen Ziehbedienvorgang zum Ziehen des freien Fensters Freeform in die voreingestellte Position, und Überwachen, ob der Ziehbedienvorgang als Reaktion auf das Verbleiben des freien Fensters Freeform in der voreingestellten Position endet; und
Bestimmen, dass die voreingestellte Bedienungsanweisung zum Ziehen des freien Fensters Freeform an die voreingestellte Position empfangen wurde, als Reaktion auf das Beenden des Ziehens; wobei die Aufforderungsinformationen Aufforderungsinformationen umfassen, die in einer Weise ausgegeben werden, dass eine gepunktete Linie angezeigt wird oder ein gepunkteter Rahmen angezeigt wird.

5. Verfahren nach Anspruch 1, wobei das Umschalten (103) des freien Fensters Freeform auf das Vollbildanzeigefenster als Reaktion darauf, dass bei der Anwendung, die im freien Fenster Freeform ausgeführt wird, das auslösende Ereignis, das die voreingestellte Bedingung erfüllt, aufgetreten ist, umfasst:
Anzeigen eines schwebenden Fensters, das eine Fensterumschaltauswahlschnittstelle enthält, als Reaktion darauf, dass bei der im freien Fenster Freeform ausgeführten Anwendung das auslösende Ereignis aufgetreten ist, das die voreingestellte Bedingung erfüllt, und
Umschalten des freien Fensters Freeform auf das Vollbildanzeigefenster auf der Grundlage einer Vollbildanzeigeanweisung, die an der Fensterumschaltauswahlschnittstelle ausgelöst wird.

6. Verfahren nach Anspruch 4, wobei das Verfahren vor dem Umschalten (103) des freien Fensters Freeform in das Vollbildanzeigefenster ferner umfasst:
Bestimmen (601), ob eine Anwendung, die derzeit in einer Art von Vollbild angezeigt wird, in der Art des freien Fensters Freeform angezeigt werden kann;
das Umschalten (103) des freien Fensters Freeform auf das Vollbildanzeigefenster umfasst:
während des Umschaltens des freien Fensters Freeform auf das Vollbildanzeigefenster, Umschalten (602) der derzeit in der Art von Vollbild angezeigten Anwendung auf Anzeige in der Art des freien Fensters Freeform als Reaktion darauf, dass die derzeit in der Art von Vollbild angezeigte Anwendung in der Art des freien Fensters Freeform angezeigt werden kann.

7. Verfahren nach Anspruch 1, wobei das Umschalten (103) des freien Fensters Freeform auf das Vollbildanzeigefenster umfasst:
Ändern eines Anwendungsanzeigemodus von der Art des freien Fensters Freeform zu einer Art von Vollbild; oder
Beibehalten der Art des freien Fensters Freeform und Einstellen der Größe des freien Fensters Freeform auf die Größe eines Vollbildanzeigefensters in der Art von Vollbild.

8. Verfahren nach Anspruch 7, wobei das Verfahren nach dem Umschalten (103) des freien Fensters Freeform in das Vollbildanzeigefenster ferner umfasst:
Empfangen einer Fensterumschaltanweisung, die im Vollbildanzeigefenster ausgelöst wird; und
Wiederherstellen des Vollbildanzeigefensters in das freie Fenster Freeform auf der Grundlage der Fensterumschaltanweisung.

9. Verfahren nach Anspruch 1, wobei das Bestimmen (101, 301), ob die im Vordergrund des Endgeräts ausgeführte Anwendung in der Art des freien Fensters Freeform angezeigt wird, umfasst:
Erfassen, ob sich eine "Activity" der im Vordergrund des Endgeräts ausgeführten Anwendung in einem vom Endgerät vordefinierten Freeform-Stapel befindet; und
Bestimmen, dass die im Vordergrund des Endgeräts ausgeführte Anwendung nach Art des freien Fensters Freeform angezeigt werden soll, als Reaktion darauf, dass sich die "Activity" im Freeform-Stapel befindet.

10. Verfahren nach Anspruch 1, wobei das Bestimmen (101, 301), ob die im Vordergrund des Endgeräts ausgeführte Anwendung in der Art des freien Fensters Freeform angezeigt wird, umfasst:
Erhalten eines Screenshots einer Anzeigeschnittstelle des Endgeräts, Identifizieren des Screenshots und Erhalten eines Identifikationsergebnisses des Screenshots;
Bestimmen, ob eine Anzeigeschnittstelle der Anwendung, die im Vordergrund des Endgeräts ausgeführt wird, im Screenshot der Anzeigeschnittstelle des Endgeräts beinhaltet ist, auf der Grundlage des Identifikationsergebnisses des Screenshots; und
Bestimmen, dass die im Vordergrund des Endgeräts ausgeführte Anwendung in der Art des freien Fensters Freeform angezeigt werden soll, als Reaktion darauf, dass die Anzeigeschnittstelle der im Vordergrund des Endgeräts ausgeführten Anwendung beinhaltet ist.

11. Verfahren nach Anspruch 1, ferner umfassend:
Durchführen des Bestimmens, ob die im Vordergrund des Endgeräts ausgeführte Anwendung in der Art des freien Fensters Freeform angezeigt wird, als Reaktion darauf, dass die im Vordergrund des Endgeräts ausgeführte Anwendung nicht in der Art des freien Fensters Freeform angezeigt wird; oder
Beenden des Fensterumschaltverfahrens als Reaktion darauf, dass die im Vordergrund des Endgeräts ausgeführte Anwendung nicht in der Art des freien Fensters Freeform angezeigt wird.

12. Endgerät, umfassend einen Speicher (92), einen Prozessor (91) und ein Computerprogramm, das im Speicher (92) gespeichert und vom Prozessor (91) ausgeführt werden kann, **dadurch gekennzeichnet, dass** der Prozessor (91) das Computerprogramm zum Durchführen eines Fensterumschaltverfahrens nach einem der Ansprüche 1 bis 11 ausführt.

13. Nichtflüchtiges, computerlesbares Speichermedium, das ein Computerprogramm speichert, **dadurch gekennzeichnet, dass** ein Prozessor das Computerprogramm zum Durchführen eines Fensterumschaltverfahrens nach einem der Ansprüche 1 bis 11 ausführt.

## Revendications

1. Procédé de commutation de fenêtre, comprenant les actions consistant à :
déterminer (101, 301) si une application exécutée dans un avant-plan d'un terminal est affichée à la manière d'une fenêtre libre Freeform ;
surveiller (102) si l'application exécutée dans la fenêtre libre Freeform a un événement de déclenchement, qui respecte une condition préréglée, ayant eu lieu, en réponse au fait que l'application est affichée à la manière de la fenêtre libre Freeform ; et
commuter (103) la fenêtre libre Freeform à une fenêtre d'affichage plein écran, en réponse au fait que l'application exécutée dans la fenêtre libre Freeform a l'événement de déclenchement, qui respecte la condition préréglée, ayant eu lieu ;
dans lequel l'action consistant à surveiller (102) si l'événement de déclenchement, qui respecte la condition préréglée, a lieu dans l'application, en réponse au fait que l'application est affichée à la manière de la fenêtre libre Freeform, comprend les actions consistant à :
surveiller (302) si une interface d'affichage actuelle de l'application exécutée dans la fenêtre libre Freeform est une interface de fonction préréglée ; dans lequel l'interface de fonction préréglée indique que l'application est en train de réaliser une fonction préréglée sur l'interface d'affichage actuelle ;
déterminer (303) que l'application exécutée dans la fenêtre libre Freeform a l'événement de déclenchement, qui respecte la condition préréglée, ayant eu lieu, en réponse au fait que l'interface d'affichage actuelle de l'application est l'interface de fonction préréglée ; et
rétablir l'application exécutée dans la fenêtre d'affichage plein écran à la fenêtre libre Freeform, en réponse au fait que l'interface d'affichage actuelle de l'application est changée de l'interface de fonction préréglée à une interface de fonction non préréglée ; dans lequel l'interface de fonction non préréglée indique que l'application n'est pas en train de réaliser la fonction préréglée sur l'interface d'affichage actuelle.

2. Procédé selon la revendication 1, dans lequel l'action consistant à surveiller (102) si l'application exécutée dans la fenêtre libre Freeform a l'événement de déclenchement, qui respecte la condition préréglée, ayant eu lieu, en réponse au fait que l'application est affichée à la manière de la fenêtre libre Freeform, comprend les actions consistant à :
surveiller s'il y a réception d'une instruction d'opération préréglée pour la fenêtre libre Freeform ; et
déterminer que l'application exécutée dans la fenêtre libre Freeform a l'événement de déclenchement, qui respecte la condition préréglée, ayant eu lieu, en réponse à la réception de l'instruction d'opération préréglée pour la fenêtre libre Freeform.

3. Procédé selon la revendication 2, dans lequel l'action consistant à surveiller s'il y a réception d'une instruction d'opération préréglée pour la fenêtre libre Freeform comprend les actions consistant à :
surveiller s'il y a réception d'une instruction d'opération préréglée pour effectuer le glisser de la fenêtre libre Freeform jusqu'à une position préréglée ; et/ou,
surveiller s'il y a réception d'une instruction d'opération préréglée déclenchée par rotation du terminal avec un angle préréglé ; et/ou,
surveiller s'il y a réception d'une instruction d'opération préréglée déclenchée par une forme vocale ; et/ou,
surveiller s'il y a réception d'une instruction d'opération préréglée déclenchée par un geste tactile dans une zone d'affichage de la fenêtre libre Freeform.

4. Procédé selon la revendication 3, dans lequel l'action consistant à surveiller s'il y a réception de l'instruction d'opération préréglée pour effectuer le glisser de la fenêtre libre Freeform jusqu'à la position préréglée comprend les actions consistant à :
sortir des informations d'invite, en réponse à une opération de glisser, pour effectuer le glisser de la fenêtre libre Freeform jusqu'à la position préréglée, et surveiller si l'opération de glisser se termine, en réponse au fait que la fenêtre libre Freeform reste à la position préréglée ; et
déterminer que l'instruction d'opération préréglée pour effectuer le glisser de la fenêtre libre Freeform jusqu'à la position préréglée a été reçue, en réponse au fait que le glisser se termine ; dans lequel les informations d'invite comprennent des informations d'invite sorties à la manière d'affichage d'une ligne pointillée ou d'affichage d'un cadre pointillé.

5. Procédé selon la revendication 1, dans lequel l'action consistant à commuter (103) la fenêtre libre Freeform à la fenêtre d'affichage plein écran, en réponse au fait que l'application exécutée dans la fenêtre libre Freeform a l'événement de déclenchement, qui respecte la condition préréglée, ayant eu lieu, comprend les actions consistant à :
faire apparaître une fenêtre flottante chargée avec une interface de sélection de commutation de fenêtre, en réponse au fait que l'application exécutée dans la fenêtre libre Freeform a l'événement de déclenchement, qui respecte la condition préréglée, ayant eu lieu, et
commuter la fenêtre libre Freeform à la fenêtre d'affichage plein écran, sur la base d'une instruction d'affichage plein écran, déclenchée dans l'interface de sélection de commutation de fenêtre.

6. Procédé selon la revendication 4, dans lequel, avant l'action consistant à commuter (103) la fenêtre libre Freeform à la fenêtre d'affichage plein écran, le procédé comprend en outre l'action consistant à :
déterminer (601) si une application actuellement affichée à la manière de plein écran est capable d'être affichée à la manière de la fenêtre libre Freeform ;
l'action consistant à commuter (103) la fenêtre libre Freeform à la fenêtre d'affichage plein écran comprend l'action consistant à :
durant l'action consistant à commuter la fenêtre libre Freeform à la fenêtre d'affichage plein écran, commuter (602) l'application actuellement affichée à la manière de plein écran pour effectuer l'affichage à la manière de la fenêtre libre Freeform, en réponse au fait que l'application actuellement affichée à la manière de plein écran est capable d'être affichée à la manière de la fenêtre libre Freeform.

7. Procédé selon la revendication 1, dans lequel l'action consistant à commuter (103) la fenêtre libre Freeform à la fenêtre d'affichage plein écran comprend les actions consistant à :
changer un mode d'affichage d'application de la manière de la fenêtre libre Freeform à une manière de plein écran ; ou
maintenir la manière de la fenêtre libre Freeform, et ajuster la taille de la fenêtre libre Freeform à la taille d'une fenêtre d'affichage plein écran à la manière de plein écran.

8. Procédé selon la revendication 7, dans lequel, après l'action consistant à commuter (103) la fenêtre libre Freeform à la fenêtre d'affichage plein écran, le procédé comprend en outre les actions consistant à :
recevoir une instruction de commutation de fenêtre déclenchée sur la fenêtre d'affichage plein écran ; et
rétablir la fenêtre d'affichage plein écran à la fenêtre libre Freeform, sur la base de l'instruction de commutation de fenêtre.

9. Procédé selon la revendication 1, dans lequel l'action consistant à déterminer (101, 301) si l'application exécutée dans l'avant-plan du terminal est affichée à la manière de la fenêtre libre Freeform comprend les actions consistant à :
détecter si une activité de l'application exécutée dans l'avant-plan du terminal est située dans une pile Freeform prédéfinie par le terminal ; et
déterminer que l'application exécutée dans l'avant-plan du terminal doit être affichée à la manière de la fenêtre libre Freeform en réponse au fait que l'activité est située dans la pile Freeform.

10. Procédé selon la revendication 1, dans lequel l'action consistant à déterminer (101, 301) si l'application exécutée dans l'avant-plan du terminal est affichée à la manière de la fenêtre libre Freeform comprend les actions consistant à :
obtenir une capture d'écran d'une interface d'affichage du terminal, identifier la capture d'écran, et obtenir un résultat d'identification de la capture d'écran ;
déterminer si une interface d'affichage de l'application exécutée dans l'avant-plan du terminal est incluse dans la capture d'écran de l'interface d'affichage du terminal, sur la base du résultat d'identification de la capture d'écran ; et
déterminer que l'application exécutée dans l'avant-plan du terminal doit être affichée à la manière de la fenêtre libre Freeform en réponse au fait que l'interface d'affichage de l'application exécutée dans l'avant-plan du terminal est incluse.

11. Procédé selon la revendication 1, comprenant en outre :
réaliser l'action consistant à déterminer si l'application exécutée dans l'avant-plan du terminal est affichée à la manière de la fenêtre libre Freeform se met à être réalisée en réponse au fait que l'application exécutée dans l'avant-plan du terminal n'est pas affichée à la manière de la fenêtre libre Freeform ; ou
l'action consistant à terminer le procédé de commutation de fenêtre en réponse au fait que l'application exécutée dans l'avant-plan du terminal n'est pas affichée à la manière de la fenêtre libre Freeform.

12. Terminal, comprenant une mémoire (92), un processeur (91) et un programme d'ordinateur stocké dans la mémoire (92) et exécutable par le processeur (91), **caractérisé en ce que** le processeur (91) exécute le programme d'ordinateur pour réaliser un procédé de commutation de fenêtre selon l'une quelconque des revendications 1 à 11.

13. Support de stockage non transitoire lisible par ordinateur, stockant un programme d'ordinateur, **caractérisé en ce qu'**un processeur exécute le programme d'ordinateur pour réaliser un procédé de commutation de fenêtre selon l'une quelconque des revendications 1 à 11.
